# EUROPÄISCHE PATENTSCHRIFT

(11) **EP 3 863 749 B1**
(45) Veröffentlichungstag und Bekanntmachung des Hinweises auf die Patenterteilung: **03.07.2024**
(21) Anmeldenummer: 19786313.7
(22) Anmeldetag: 08.10.2019
(51) Int. Cl.: B01D 46/00, B01D 46/10

(54) **VERFAHREN UND VORRICHTUNG ZUR FILTERUNG EINER VERUNREINIGTEN LUFT**
METHOD AND DEVICE FOR FILTERING POLLUTED AIR
PROCÉDÉ ET DISPOSITIF POUR FILTRER DE L'AIR POLLUÉ

(30) Priorität: 13.10.2018 DE 102018008122
(43) Veröffentlichungstag der Anmeldung: 18.08.2021
(73) Patentinhaber: Oerlikon Textile GmbH & Co. KG, 42897 Remscheid (DE)
(72) Erfinder: RICKERTS, Stephan, 24623 Großenaspe (DE); CLAUßEN, Ernst, 24888 Steinfeld (DE); PETERSEN, Hauke, 23845 Oering (DE); KNÖDLER, Frank, 24582 Brügge (DE); DITTSCHER, Sonja, 24610 Trappenkamp (DE)
(74) Vertreter: Neumann, Ditmar
(86) Internationale Anmeldenummer: PCT/EP2019/077165
(87) Internationale Veröffentlichungsnummer: WO 2020/074479

(56) Entgegenhaltungen:
- CN-A- 107 913 551
- DE-U1- 20 011 589
- FR-A1- 2 390 195
- US-A1- 2005 150 382
- US-A1- 2013 068 098
- US-A1- 2015 336 042

## Beschreibung

Die Erfindung betrifft ein Verfahren zur Herstellung von Fasern oder Fäden, umfassend eine Filtrierung einer durch den Herstellungsprozess verunreinigten Luft gemäß dem Oberbegriff des Anspruchs 1 sowie eine Vorrichtung zur Herstellung von Fasern oder Fäden, umfassend eine Filtrierung einer verunreinigten Luft gemäß dem Oberbegriff des Anspruchs 7.

In Produktionsanlagen für Fasern oder Fäden wird das Medium Luft in vielfältiger Art und Weise zur Behandlung von Fasern und Fäden genutzt. So wird beispielsweise klimatisierte Luft zur Kühlung von frisch extrudierten Filamenten oder zur Kühlung von behandelten Fasersträngen genutzt. Ebenso sind Anwendungen bekannt, bei welcher die Luft zum Verwirbeln oder Texturieren von multifilen Fäden eingesetzt wird. Um derartige gebrauchte Luft der Umgebung zurückzuführen, ist es jedoch erforderlich, die Luft von Schwebstoffen zu befreien. Zu diesem Zweck werden Filtervorrichtungen in einen Saugstrom der Luft angeordnet, wobei ein oder mehrere Filterelemente zur Filtrierung und Reinigung der Luft durchströmt werden. Je nach Belastung der Luft ist die Betriebszeit derartiger Filterelemente jedoch begrenzt. Zur Verlängerung der Betriebszeiten von Filterelementen sind im Stand der Technik grundsätzlich verschiedene Arten von Filtervorrichtungen bekannt.

Bei einer ersten Variante von Filtervorrichtungen, die beispielsweise aus der DE 28 02 369 A1 bekannt sind, ist in einem Luftkanalsystem eine Filtereinrichtung mit einem Filterelement angeordnet, das als Trommelfilter ausgebildet ist. Dem Trommelfilter ist eine bewegliche Saugdüse zugeordnet, um die Oberfläche von anhaftenden Schwebstoffen zu befreien. Derartige Filterelemente, die während des Betriebes gereinigt werden, besitzen den Vorteil, dass der Produktionsprozess ununterbrochen fortgesetzt werden kann. Allerdings stoßen derartige Filtervorrichtungen an ihre Grenzen, wenn feine Filterelemente während des Betriebes zu reinigen sind.

Eine zweite Gattung von Filtervorrichtungen, die beispielsweise in der DE 91 01 692 U1 offenbart ist, weisen in einem Luftkanalsystem eine Filtereinrichtung mit einem auswechselbaren Filterelement auf. Bei derartigen Filtervorrichtungen wird das Filterelement komplett aus der Filtereinrichtung entnommen und einem Reinigungsprozess zugeführt. Der Nachteil bei derartigen Filtervorrichtungen besteht jedoch darin, dass der Produktionsprozess üblicherweise zum Wechsel der Filterelemente unterbrochen werden muss. US 2015/336042 A1, CN 107 913 551 A, US 2013/068098 A1, US 2005/150382 A1, FR 2 390 195 A1 und DE 200 11 589 U1 zeigen weiter relevante Filtervorrichtungen.

Es ist daher Aufgabe der Erfindung, ein Verfahren zur Filtrierung einer verunreinigten Luft sowie eine Vorrichtung zur Filtrierung einer verunreinigten Luft der gattungsgemäßen Art bereitzustellen, bei welchem die verunreinigte Luft ohne Prozessunterbrechung kontinuierlich und mit gleichmäßiger Qualität filtriert werden kann.

Diese Aufgabe wird erfindungsgemäß für ein Verfahren dadurch gelöst, dass mehrere Filterelemente in der Filteraufnahmeeinrichtung derart vorgehalten werden, dass bei Entnahme eines der Filterelemente ein selbsttätiger Austausch des verschmutzten Filterelementes im Luftkanalsystem erfolgt.

Für die erfindungsgemäße Vorrichtung ergibt sich die Lösung daraus, dass die Filteraufnahmeeinrichtung zur Aufnahme mehrerer Filterelemente mehrere Filterkammern aufweist, die derart zueinander angeordnet sind, dass das Filterelement bei einem Austausch von einem der Filterkammern in einer andere Filterkammer gleitend führbar ist.

Vorteilhafte Weiterbildungen der Erfindung sind durch die Merkmale und Merkmalskombinationen der jeweiligen Unteransprüche definiert.

Die Erfindung zeichnet sich dadurch aus, dass ein Austausch des Filterelementes ohne Prozessunterbrechung ausführbar ist. Die verunreinigte Luft lässt sich kontinuierlich durch die Filterelemente saugen und filtrieren. In Abhängigkeit von einer bei solchen Systemen üblicherweise gemessenen Druckdifferenz lässt sich der Verschmutzungsgrad des Filterelementes erkennen, so dass bei Entnahme eines der Filterelemente ein selbsttätiger Austausch des verschmutzten Filterelementes im Luftkanalsystem erfolgt. Damit wird gewährleistet, dass die verunreinigte Luft ohne wesentliche Unterbrechung kontinuierlich durch eines des Filterelemente gesogen wird.

Damit möglichst keine unfiltrierte Luft während des Wechsels der Filterelemente auftritt, werden die Filterelemente in übereinander angeordneten Filterkammern gehalten, die beim Austausch des verschmutzten Filterelementes zu einem Fallschacht miteinander verbunden werden. So kann die an den Filterelementen angreifende maximale Schwerkraft vorteilhaft genutzt werden, um den Austausch zu beschleunigen.

Bei hohen Unterdrücken in dem Luftkanalsystem hat sich in der Erfindung beanspruchten Verfahrensvariante besonders bewährt, bei welcher zur Unterstützung des Austauschs der Filterelemente in einer unteren der Filterkammer ein Vakuum erzeugt wird. Somit wird innerhalb der zu einem Fallschacht kombinierten Filterkammern eine Sogwirkung erzeugt, die das Luftkanalsystem befindliche Filterelement in die untere Filterkammer fördert. Ein Anhaften des Filterelementes in dem Luftkanalsystem aufgrund eines hohen Unterdruckes lässt sich damit umgehen.

Das in der unteren Filterkammer eingetauchte verschmutzte Filterelement unterstützt auch weiterhin die Filtrierung der verunreinigten Luft, indem das eingewechselte Filterelement in seiner Betriebsstellung dadurch gehalten wird. Um möglichst geringe Druckschwankungen während eines Austauschs eines der Filterelemente zu erhalten, ist die Verfahrensvariante bevorzugt ausgeführt, bei welcher ein neues Filterelement in einer Einsteckkammer vorgehalten wird und wobei die Einsteckkammer zum Austausch des gebrauchten Filterelementes mit der oberen Filterkammer verbunden wird. So lässt sich das eingewechselte neue Filterelement aus einer geschlossenen Einsteckkammer in die obere Filterkammer einführen. Ein Ansaugen von Fremdluft wird dadurch vermieden.

Um sicherzustellen, dass bei Entnahme des verschmutzten Filterelementes aus der unteren Filterkammer ein neues Filterelement in das Luftkanalsystem einführbar ist, wird die Verfahrensvariante verwendet, bei welcher das verschmutzte Filterelement nur nach Freigabe der Verbindung zwischen dem neuen Filterelement und dem gebrauchten Filterelement entnommen werden kann. Derartige logische Verknüpfungen gewährleisten eine Filtrierung der verunreinigten Luft mit hoher Sicherheit gegenüber den Bedienungsabläufen.

Die erfindungsgemäße Vorrichtung zur Filtrierung einer verunreinigten Luft besitzt den besonderen Vorteil, dass zum einen eine kontinuierliche Filtrierung ohne Prozessunterbrechung möglich ist und zum anderen die Filterelemente intensiv gereinigt werden können. So lässt sich ein neues Filterelement durch Wirkung einer Schwerkraft in einfacher Art und Weise in das Luftkanalsystem einführen, wobei das gebrauchte Filterelement in eine untere Filterkammer eintaucht. So wird eine Gefälle n der Filteraufnahmeeinrichtung genutzt, um einen schnellen Austausch der Filterelemente in der Filteraufnahmeeinrichtung vorzunehmen.

Besonders wirkungsvoll ist die Weiterbildung der erfindungsgemäßen Vorrichtung, bei welcher die Filterkammern der Filteraufnahmeeinrichtung einen Fallschacht bilden in welchem die Filterelemente übereinander gehalten sind. So lässt sich eine maximale Schwerkraft nutzen, um die Filterelemente zu wechseln.

Bei einer weiteren Weiterbildung der erfindungsgemäßen Vorrichtung wird das Filterelement zwischen dem Lufteinlass und dem Luftauslass in einer oberen Filterkammer gehalten, die zwischen dem Lufteinlass und dem Luftauslass luftdurchlässig ausgebildet ist und eine obere Filteröffnung zum Einfallen eines neuen Filterelementes aufweist. Damit weist das im Betrieb befindliche Filterelement eine definierte Stellung innerhalb des Luftkanalsystems auf.

Um Druckverluste zu minimieren und einen Fremdlufteinzug zu verhindern, ist die Filteröffnung der oberen Filterkammer durch einen Schubdeckel verschlossen, der zum Öffnen und Schließen der oberen Filterkammer bewegbar ausgebildet ist. Der Schubdeckel kann hierbei manuell oder automatisiert geführt werden. Damit ist das Luftkanalsystem nach der Umgebung hin abgeschlossen.

Damit auch nach unten hin die Filteraufnahmeeinrichtung verschlossen ist, weist die untere Filterkammer geschlossene Kammerwände auf und eine seitliche Entnahmeöffnung mit einer verschließbaren Abdeckung. Die Abdeckung der unteren Filterkammer wird nur bei Bedarf zur Entnahme einer der verschmutzten Filterelemente geöffnet.

Um während der Austauschphase einen möglichst ununterbrochenen gefilterten Luftstrom zu erhalten und die Druckverluste zu minimieren, ist die Weiterbildung der Erfindung bevorzugt ausgeführt, bei welcher die Filteraufnahmeeinrichtung oberhalb der oberen Filterkammer eine Einsteckkammer mit einer verschließbaren Einstecköffnung aufweist, wobei die Einsteckkammer mit der oberen Filterkammer verbindbar ist. So lässt sich das neue Filterelement bei Austausch des verschmutzten Filterelementes aus einer geschlossenen Einsteckkammer heraus in das Luftkanalsystem einführen. Ein Einzug von Fremdluft wird vermieden und der betriebsbedingte Unterdruck lässt sich auch während der Wechselphase des Filterelementes einhalten.

Damit ein Austausch der Filterelemente möglichst einfach zu handeln ist, sind die Filterelemente bevorzugt durch eine Filterkassette gebildet, die in einem Rahmen zumindest ein Filtermaterial aufweist. Als Filtermaterial können hierbei in Abhängigkeit von der Filterfeinheit Gewebe, Drähte oder Vliesmaterialien verwendet werden.

Durch die Weiterbildung der erfindungsgemäßen Vorrichtung, bei welcher an dem Luftkanalsystem mehrere Filteraufnahmeeinrichtungen parallel nebeneinander vorgesehen sind, durch welche mehrere Filterelemente mit unterschiedlichen Filtermaterialien zwischen dem Lufteinlass und dem Luftauslass gehalten sind, ist besonders vorteilhaft, um die Lebensdauer bis zu einem Austausch der Filterelemente zu verlängern. So lassen sich Grob- und Feinfiltermaterialien in unterschiedlichen Filterelementen innerhalb des Luftkanalsystems anordnen.

Die erfindungsgemäße Vorrichtung zur Filtrierung einer verunreinigten Luft ist besonders wirkungsvoll, in den Fällen, in denen die Luftauslassöffnung des Luftkanalsystems mit einem Sauganschluss einer Unterdruckquelle, insbesondere mit einem Gebläse verbunden ist. Grundsätzlich besteht jedoch auch die Möglichkeit, die erfindungsgemäße Vorrichtung zur Filtrierung einer verunreinigten Luft in einem Drucksystem anzuordnen.

Eine erfindungsgemäße Absaugvorrichtung zum Absaugen einer verunreinigten Luft mit einem Gebläse und mit einer Filtervorrichtung, die der erfindungsgemäßen Vorrichtung zur Filtrierung entspricht, ist somit besonders vorteilhaft einsetzbar, um beispielsweise in Produktionsanlagen von Fasern und Fäden eingesetzt zu werden. Die erfindungsgemäße Absaugvorrichtung gewährleistet einen kontinuierlichen ununterbrochenen Betrieb der Produktionsanlage.

Das erfindungsgemäße Verfahren zur Filtrierung einer verunreinigten Luft wird nachfolgend anhand einiger Ausführungsbeispiele der erfindungsgemäßen Vorrichtung zur Filtrierung einer verunreinigten Luft unter Bezug auf die beigefügten Figuren näher erläutert.

Es stellen dar:
Fig. 1 schematisch eine Seitenansicht eines ersten Ausführungsbeispiels der erfindungsgemäßen Filteranlage zur Filtrierung einer verunreinigten Luft
Fig. 2 schematisch eine Querschnittsansicht des Ausführungsbeispiels aus Fig. 1
Fig. 3 schematisch eine Vorderansicht des Ausführungsbeispiels aus Fig. 1
Fig.4 schematisch eine Seitenansicht eines weiteren Ausführungsbeispiels der erfindungsgemäßen Filteranlage zur Filtrierung einer verunreinigten Luft
Fig. 5 schematisch eine Vorderansicht des Ausführungsbeispiels aus Fig. 4
Fig. 6 schematisch eine Seitenansicht eines weiteren Ausführungsbeispiels der erfindungsgemäßen Filteranlage zur Filtrierung einer verunreinigten Luft

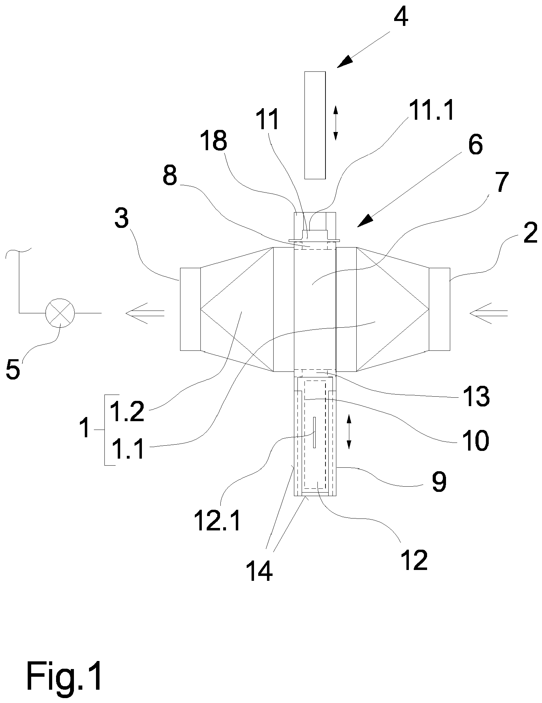

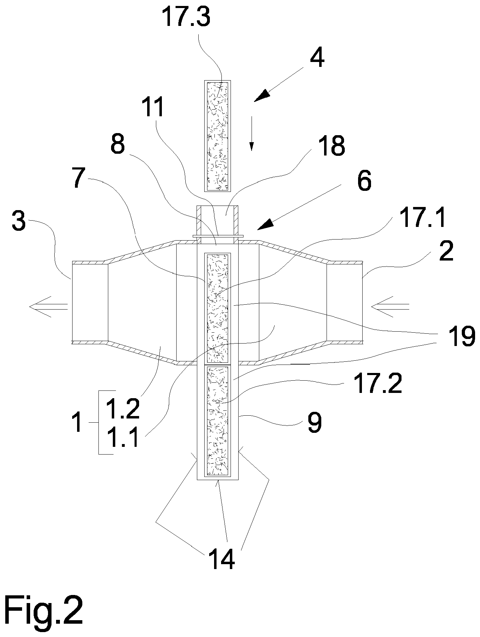

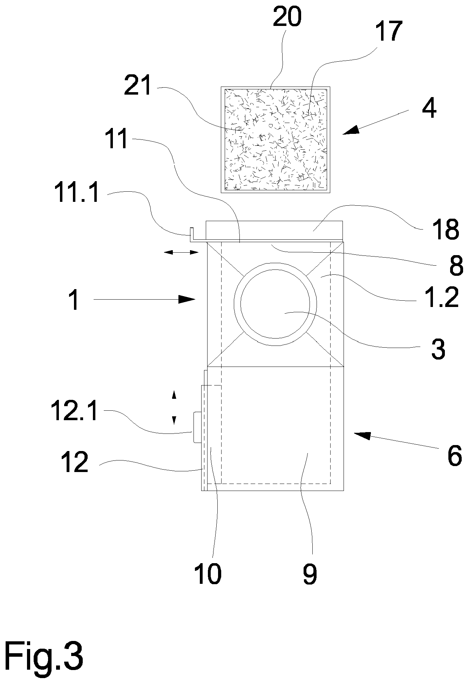

In den Fig. 1, 2 und 3 ist ein erstes Ausführungsbeispiel der erfindungsgemäßen Filteranlage zur Filtrierung einer verunreinigten Luft schematisch in mehreren Ansichten dargestellt. In Fig. 1 ist das Ausführungsbeispiel in einer Seitenansicht, in Fig. 2 in einer Querschnittsansicht und in Fig. 3 in einer Vorderansicht dargestellt. Insoweit kein ausdrücklicher Bezug zu einer der Figuren gemacht ist, gilt die nachfolgende Beschreibung für alle Figuren.

Das Ausführungsbeispiel der erfindungsgemäßen Filteranlage zur Filtrierung einer verunreinigten Luft weist einen Luftkanalsystem 1 auf. Das Luftkanalsystem 1 besteht aus einem Einlassstutzen 1.1 und einem Auslassstutzen 1.2, die zwischen sich eine Filteraufnahmeeinrichtung 6 einschließen. Der Einlassstutzen 1.1 bildet einen Lufteinlass 2. Der zur Filteraufnahmeeinrichtung 6 gegenüberliegende Auslassstutzen 1.2 bildet einen Luftauslass 3.

Die Filteraufnahmeeinrichtung 6 weist in diesem Ausführungsbeispiel eine obere Filterkammer 7, die zwischen den Einlassstutzen 1.1 und dem Auslassstutzen 1.2 integriert ist. Die obere Filterkammer 7 ist luftdurchlässig ausgeführt und weist nur seitliche Kammerwände zur Aufnahme eines Filterelementes 4 auf. Auf einer Oberseite der oberen Filterkammer 7 ist eine Filteröffnung 8 ausgebildet, die sich über den Querschnitt der Filterkammer 7 erstreckt. Die Filteröffnung 8 ist durch einen Schubdeckel 11 verschlossen. Der Schubdeckel 11 lässt sich zum Öffnen und Schließen der Filteröffnung 8 verschieben. In diesem Ausführungsbeispiel weist hierzu der Schubdeckel an einem freien Ende einen Handgriff 11.1 auf, so dass eine Bedienperson den Schubdeckel 11 betätigen kann. Grundsätzlich könnte das Verschieben des Schubdeckels 11 auch durch einen Linearantrieb ausgeführt werden.

Oberhalb des Schubdeckels 11 ist eine Halteschale 18 angeordnet, in welchem ein Filterelement einsteckbar ist.

Die obere Filterkammer 7 der Filteraufnahmeeinrichtung 6 erstreckt sich im Wesentlichen über die Querschnitte des Einlassstutzens 1.1 und des Auslassstutzens 1.2. An einer Unterseite der oberen Filterkammer 7 ist eine Durchlassöffnung 13 ausgebildet, die sich über den Querschnitt der oberen Filterkammer 7 erstreckt. Die Durchlassöffnung 13 verbindet die obere Filterkammer 7 mit einer unteren Filterkammer 9. Die untere Filterkammer 9 erstreckt sich unterhalb des Luftkanalsystems 1 in einer derartigen Ausdehnung, dass die untere Filterkammer 9 ein Filterelement 4 umschließen kann. Die untere Filterkammer 9 ist durch geschlossene Kammerwände 14 gebildet und weist eine seitliche Entnahmeöffnung 10 auf. Die Entnahmeöffnung 10 ist mit einer Abdeckung 12 verschlossen. Die Abdeckung 12 lässt sich zum Öffnen der Entnahmeöffnung 10 manuell verschieben. Hierzu weist die Abdeckung 12 einen Handgriff 12.1 auf. Die Betätigung der Abdeckung 12 könnte jedoch auch durch einen Aktor ausgeführt werden.

Die obere Filterkammer 7 und die untere Filterkammer 9 bilden innerhalb der Filteraufnahmeeinrichtung einen durchgängigen Fallschacht 19, in dem die Filterelemente 4 übereinander angeordnet gehalten sind, wobei das untere Filterelement das obere Filterelement abstützt.

Wie aus der Fig. 3 hervorgeht, sind die Filterelemente 4 durch jeweils eine Filterkassette 17 gebildet. Die Filterkassette 17 weist einen quaderförmigen Rahmen 20 auf, indem ein Filterelement 21 gehalten ist. Das Filtermaterial 21 kann hierbei durch ein Drahtgeflecht, einem Gewebe oder einem Fließmaterial gebildet sein. Je nach Anforderung der Luftreinigung wird das entsprechende Filtermaterial gewählt.

Im Betrieb ist der Luftauslass 3 mit einer Unterdruckquelle verbunden. Eine derartige Absaugeinrichtung stellt Fig. 1 dar, wobei die Unterdruckquelle mit dem Bezugszeichen 5 gekennzeichnet und nur symbolisch dargestellt ist. Insoweit wird an dem Lufteinlass 2 ein Unterdruck erzeugt, um eine Luft aus einer Produktionsanlage aufnehmen und Filtrieren zu können. In dieser Situation - wie in Fig. 2 dargestellt - wird beispielsweise die Filterkassette 17.1 in der oberen Filterkammer 7 zwischen dem Lufteinlass 2 und dem Luftauslass 3 gehalten. Die über den Lufteinlass 2 eingesogene verunreinigte Luft wird durch das Filtermaterial der Filterkassette 17.1 geführt und die Schwebeteile aus der Luft herausgefiltert. An dem Luftauslass 3 verlässt die gereinigte Luft das Luftkanalsystem 1. Dieser Vorgang wird so lange fortgeführt, bis eine unzulässige Verschmutzung der Filterkassette 17.1 in der oberen Filterkammer 7 festgestellt wird. Während dieser Zeit wird die nach dem letzten Austausch gehaltene Filterkassette 17.2 in der unteren Filterkammer 9 angeordnet und stützt die Filterkassette 17.1 in der oberen Filterkammer 7 ab.

Sobald eine unzulässige Verschmutzung der Filterkassette 17.1 festgestellt wird, beispielsweise durch eine Differenzdruckmessung, wird ein Austausch der Filterkassette 17.1 vorbereitet. Zunächst wird eine neue Filterkassette 17.3 in die Halteschale 18 oberhalb der Filteröffnung 8 gesteckt. In dieser Situation ist die Filteröffnung 8 und die Entnahmeöffnung 10 noch verschlossen. Nun wird der Schubdeckel 11 durch eine Bedienperson betätigt, um die Filteröffnung 8 der oberen Filterkammer 7 zu öffnen. Die Filterkassette 17.3 stützt sich nun an einer Oberseite der Filterkassette 17.1 ab. Danach wird die Entnahmeöffnung 10 durch Betätigung der Abdeckung 12 geöffnet. Die Bedienperson greift nun mit einem Hilfswerkzeug beispielsweise angeformt an der Abdeckung 12 die Filterkassette 17.2 in der unteren Filterkammer 9 und zieht diese aus der unteren Filterkammer 9 heraus. Für den Fall, dass die Schwerkräfte der Filterkassetten 17.1 und 17.3 den an der Filterkassette 17.1 wirkenden Unterdruck überwinden, gleiten die Filterkassetten 17.1 und 17.3 fallschachtartig nach unten, so dass die Filterkassette 17.1 in der unteren Filterkammer 9 und die Filterkassette 17.3 in der oberen Filterkammer 7 gehalten sind.

Für den Fall, dass der Unterdruck in dem System ein Abgleiten der Filterkassette 17.1 aus der oberen Filterkammer 7 behindert, wird nach Entnahme der Filterkassette 17.2 die Entnahmeöffnung 10 unmittelbar mit der Abdeckung 12 verschlossen. Nun entsteht wieder ein Unterdruck in der unteren Filterkammer 9, so dass die Filterkassetten 17.1 und 17.3 unter einer Sogwirkung dem Fallschacht 19 hinuntergleiten. Sobald die Filterkassette 17.3 in der oberen Filterkammer 9 in einer Betriebsstellung zwischen dem Lufteinlass 2 und dem Luftauslass 3 angeordnet ist, wird der Schubdeckel 11 betätigt, um die Filteröffnung 8 an der Oberseite der oberen Filterkammer 7 zu verschließen. Der Wechselvorgang und Austausch des Filterelementes ist in diesem Fall abgeschlossen. Die über den Einlassstutzen 1.1 eintretende ungereinigte Luft wird dabei kontinuierlich ohne wesentliche Unterbrechung filtriert, so dass ein angrenzender Produktionsprozess ohne Unterbrechung fortgeführt werden kann. Die aus der Filteraufnahmeeinrichtung 6 entnommene Filterkassette 17.2 wird dann einem Reinigungsprozess zugeführt, um bei einem nächsten Wechsel erneut eingeführt zu werden.

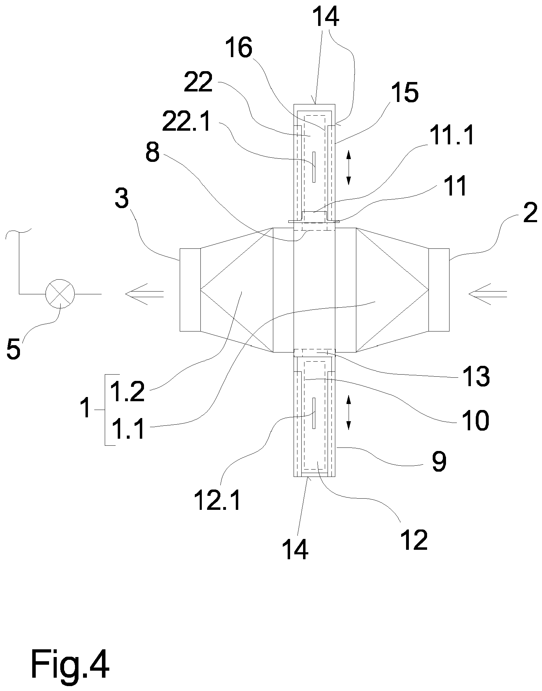

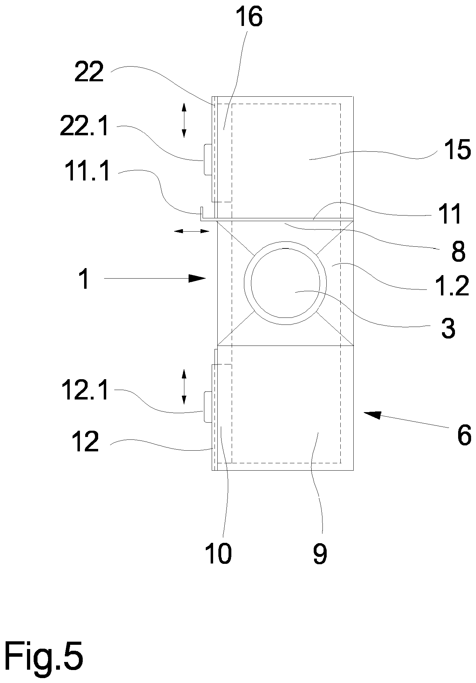

Um bei einem gegenüber Fremdluft empfindlichen System den Wechsel der Filterelemente möglichst ohne Druckschwankungen und ohne Fremdlufteinfluss ausführen zu können, ist in Fig. 4 und 5 ein weiteres Ausführungsbeispiel der erfindungsgemäßen Vorrichtung zur Filtrierung einer verunreinigten Luft dargestellt. In Fig. 4 ist eine Seitenansicht und in Fig. 5 eine Vorderansicht gezeigt. Insoweit kein ausdrücklicher Bezug zu einer der Figuren gemacht ist, gilt die nachfolgende Beschreibung für beide Figuren.

Das in Fig. 4 und 5 dargestellte Ausführungsbeispiel der erfindungsgemäßen Vorrichtung ist im Wesentlichen identisch zu dem Ausführungsbeispiel nach den Fig. 1 bis 3, so dass an dieser Stelle nur die Unterschiede erläutert werden und ansonsten Bezug zu der vorgenannten Beschreibung genommen wird, um Wiederholungen zu vermeiden.

Bei dem in Fig. 4 und 5 dargestellten Ausführungsbeispiel ist die Filteraufnahmeeinrichtung 6 mit einer oberen Einsteckkammer 15 ausgeführt. Die obere Einstecckammer 15 weist eine Einstecköffnung 16 auf, die durch eine Abdeckung 22 verschließbar ausgeführt ist. Die Einsteckkammer 15 ist durch geschlossene Kammerwände 14 gebildet und nur zur Unterseite mit einer Filteröffnung 8 durchlässig ausgeführt. Die Abdeckung 22 ist ebenfalls mit einem Handgriff 22.1 ausgeführt, um eine manuelle Bedienung zu ermöglichen. Die Einsteckkammer 15 erstreckt sich im Querschnitt über eine obere Filterkammer 7 und eine untere Filterkammer 9, die gemeinsam zu einem Fallschacht 19 verbindbar sind.

Die untere Filterkammer 9 und die obere Filterkammer 7 der Filteraufnahmeeinrichtung 6 sind identisch zu dem Ausführungsbeispiel nach Fig. 1 bis 3 ausgeführt. Insoweit wird auf die vorgenannte Beschreibung Bezug genommen.

Zwischen der Einsteckkammer 15 und der oberen Filterkammer 7 ist ein Schubdeckel 11 angeordnet, der die Filteröffnung 8 zwischen der Einsteckkammer 15 und der oberen Filterkammer 7 verschließt. Der Schubdeckel 11 lässt sich zum Öffnen der Filteröffnung 8 nur dann betätigen, wenn die Abdeckung 22 die Einstecköffnung 16 der Einsteckkammer 15 verschlossen hat. So wird in der Einsteckkammer 15 ein neues Filterelement vorgehalten, um bei einem nächsten Austausch der Filterelemente den zuvor bereits beschriebenen Vorgang zu starten. Das Bestücken der Einsteckkammer 15 mit einem neuen Filterelement ist unabhängig vom jeweiligen Wechselvorgang, so dass vorteilhaft die beim Austausch frei werdende verschmutzte Filterkassette nach der Reinigung direkt in die Einsteckkammer zurückgeführt werden könnte. Zudem erfolgt der Austausch der Filterkassetten bei geschlossener Einsteckkammer 15, so dass nach dem Öffnen der Filteröffnung 8 ein geschlossenes System vorherrscht. Das betriebliche Druckniveau wird im Wesentlichen selbst bei geöffneter Filteröffnung 8 beibehalten.

Die Funktion des in Fig. 4 und 5 dargestellten Ausführungsbeispiels der erfindungsgemäßen Filteranlage zur Filtrierung verunreinigter Luft ist identisch zu dem Ausführungsbeispiel nach den Fig. 1 bis 3, so dass an dieser Stelle Bezug zu der vorgenannten Beschreibung genommen wird.

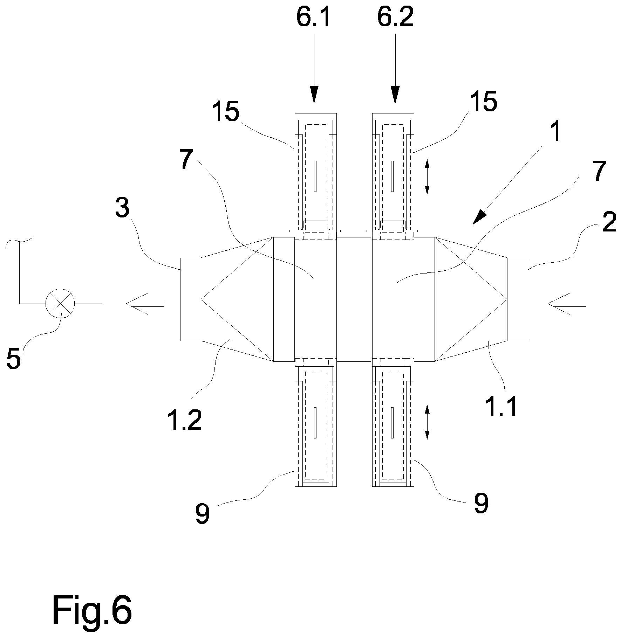

Die in den Fig. 1 bis 4 dargestellten Ausführungsbeispiele der erfindungsgemäßen Filteranlage basieren darauf, dass eine Filtrierung der Luft durch ein Filterelement erfolgt. Je nach Anwendungsfall kann das aber auch vorteilhaft sein, wenn eine Vorfiltrierung grober Bestandteile stattfindet, um beispielsweise grobe Schwebteilchen in einem Vorfilter zu sammeln. Hierzu ist in der Fig. 6 ein weiteres Ausführungsbeispiel der erfindungsgemäßen Vorrichtung zur Filtrierung verunreinigter Luft schematisch in einer Seitenansicht dargestellt. Bei dem gezeigten Ausführungsbeispiel sind in einem Luftkanalsystem 1 mehrere Filteraufnahmeeinrichtungen 6.1 und 6.2 parallel nebeneinander gehalten. Die Filteraufnahmeeinrichtungen 6.1 und 6.2 sind in ihrem Gehäuseaufbau identisch zu dem Ausführungsbeispiel nach Fig. 4 und 5. Insoweit wird zur Beschreibung der Filteraufnahmeeinrichtungen 6.1 und 6.2 Bezug zu der vorgenannten Beschreibung genommen. Jede der Filteraufnahmeeinrichtungen 6.1 und 6.2 weist somit eine Einsteckkammer 15, eine obere Filterkammer 7 und eine untere Filterkammer 9 auf, die zu einem Fallschacht verbindbar sind. Jede der Filteraufnahmeeinrichtungen 6 enthält zumindest zwei Filterkassetten, die sich in der oberen Filterkammer 7 und in den unteren Filterkammern 9 befinden. Die Filterkassetten der Filteraufnahmeeinrichtung 6.1 weisen ein grobmaschiges Filtermaterial auf, um eine Vorfiltrierung der Luft durchzuführen. Demgegenüber weist die Filteraufnahmeeinrichtung 6.2 Filterkassetten auf, die ein feinmaschiges Filtermaterial enthalten. Jede der Filteraufnahmeeinrichtungen 6.1 und 6.2 lässt sich unabhängig voneinander bedienen.

Das erfindungsgemäße Verfahren und die erfindungsgemäße Vorrichtung zur Filtrierung verunreinigter Luft ist in den Produktionsprozessen von Fasern und Fäden geeignet, um einen Absaugstrom einer Luft zu filtrieren. Die Anwendungen in den Produktionsprozessen von Fasern und Fäden ist besonders vorteilhaft, da diese Prozesse im wesentlichen kontinuierlich über lange Betriebszeiten ausgeführt werden.

Bei den Ausführungsbeispielen nach Fig. 1 bis 6 ist die Filteraufnahmeeinrichtung vertikal angeordnet, um die maximal mögliche Schwerkraft zum Austausch der Filterelemente zu nutzen. Grundsätzlich besteht jedoch auch die Möglichkeit, die Filteraufnahmeeinrichtung in einer Winkellage im Bereich zwischen 0° und 90° anzuordnen. So könnte zum Austausch der Filterelemente auch eine Gleitschräge genutzt werden, um die Filterelemente aus einer oberen Position in eine unter Position an der Filteraufnahmeeinrichtung zu führen.

## Patentansprüche

1. Verfahren zur Herstellung von Fasern oder Fäden bei dem klimatisierte Luft zur Kühlung von frisch extrudierten Filamenten oder zur Kühlung von behandelten Fasersträngen genutzt, oder Luft zum Verwirbeln oder Texturieren multifilen Fäden verwendet wird, umfassend eine Filtrierung einer durch den Herstellungsprozess verunreinigten Luft, bei welchem die Luft durch zumindest ein Filterelement (4) gesogen wird und bei welchem das Filterelement (4) auswechselbar in einer Filteraufnahmeeinrichtung (6) eines Luftkanalsystem gehalten wird, **dadurch gekennzeichnet, dass** mehrere Filterelemente (4) in der Filteraufnahmeeinrichtung (6) derart vorgehalten werden, dass bei Entnahme eines der Filterelemente (4) ein selbsttätiger Austausch des verschmutzten Filterelementes (4) im Luftkanalsystem erfolgt, wobei die Filterelemente (4) in übereinander angeordneten Filterkammern (7, 9) gehalten werden, die beim Austausch des verschmutzten Filterelementes (4) zu einem Fallschacht (19) mit einander verbunden werden, wobei zur Unterstützung des Austausches der Filterelemente (4) in einer unteren der Filterkammern (9) ein Vakuum erzeugt wird.

2. Verfahren nach Anspruch 1, **dadurch gekennzeichnet, dass** nach dem Austausch das verschmutzte Filterelement (4) in der unteren Filterkammer (9) bleibt und das eingewechselte Filterelement (4) in einer Betriebsstellung stützt.

3. Verfahren nach Anspruch 1 oder 2, **dadurch gekennzeichnet, dass** ein neues Filterelement (4) in einer Einsteckkammer (15) vorgehalten wird, wobei die Einstecckammer (15) zum Austausch des gebrauchten Filterelementes (4) mit der oberen Filterkammer (7) verbunden wird.

4. Verfahren nach einem der Ansprüche 1 bis 3, **dadurch gekennzeichnet, dass** das verschmutzte Filterelement (4) nur nach Freigabe der Verbindung zwischen dem neuen Filterelement (4) und dem gebrauchten Filterelement (4) entnommen werden kann.

5. Vorrichtung zur Herstellung von Fasern oder Fäden, bei der klimatisierte Luft zur Kühlung von frisch extrudierten Filamenten oder zur Kühlung von behandelten Fasersträngen genutzt, oder Luft zum Verwirbeln oder Texturieren multifilen Fäden verwendet wird, und zur Filtrierung einer verunreinigten Luft mit einem Luftkanalsystem (1), das einen Lufteinlass (2), einen Luftauslass (3) und eine Filteraufnahmeeinrichtung (6) aufweist, wobei die Filteraufnahmeeinrichtung (6) zumindest ein Filterelement (4) zwischen dem Lufteinlass (2) und dem Luftauslass (3) hält, **dadurch gekennzeichnet, dass** die Filteraufnahmeeinrichtung (6) zur Aufnahme mehrerer Filterelemente (4) mehrere Filterkammern (7, 9) aufweist, die derart zu einander angeordnet sind, dass das Filterelement (4) bei einem Austausch von einer der Filterkammern (7, 9) in eine andere Filterkammer (7, 9) gleitend führbar ist, wobei die Filterkammern (7, 9) der Filteraufnahmeeinrichtung (6) einen Fallschacht (19) bilden, in welchem die Filterelement (4) übereinander gehalten sind, wobei das Filterelement (4, 17.1) zwischen dem Lufteinlass (2) und dem Luftauslass (3) in einer oberen der Filterkammern (7) gehalten ist, die zwischen dem Lufteinlass (2) und dem Luftauslass (3) luftdurchlässig ausgebildet ist und eine obere Filteröffnung (8) zum Einfallen eines neuen Filterelementes (4, 17.3) aufweist, wobei zur Unterstützung des Austausches der Filterelemente (4) in einer unteren der Filterkammern (9) ein Vakuum erzeugt wird.

6. Vorrichtung nach Anspruch 5, **dadurch gekennzeichnet, dass** die Filteröffnung (8) der oberen Filterkammer (7) einen Schubdeckel (11) aufweist, wobei der Schubdeckel (11) zum Öffnen und Schließen der oberen Filterkammer (7) bewegbar ausgebildet ist.

7. Vorrichtung nach Anspruch 5 oder 6, **dadurch gekennzeichnet, dass** die untere der Filterkammern (9) geschlossene Kammerwände (14) und eine seitliche Entnahmeöffnung (10) mit einer verschließbaren Abdeckung (12) aufweist.

8. Vorrichtung nach einem der Ansprüche 5 bis 7, **dadurch gekennzeichnet, dass** die Filteraufnahmeeinrichtung (6) oberhalb der oberen Filterkammer (7) eine Einsteckkammer (15) mit einer verschließbaren Einstecköffnung (16) aufweist, wobei die Einsteckkammer (15) mit der oberen Filterkammer (7) verbindbar ist.

9. Vorrichtung nach einem der Ansprüche 6 bis 8, **dadurch gekennzeichnet, dass** die Filterelemente (4) jeweils durch eine Filterkassette (17) gebildet sind, die aus einem Rahmen (20) und zumindest einen Filtermaterial (21) gebildet ist.

10. Vorrichtung nach einem der Ansprüche 6 bis 9, **dadurch gekennzeichnet, dass** an dem Luftkanalsystem (1) mehrere Filteraufnahmeeinrichtungen (6.1, 6.2) parallel nebeneinander vorgesehen, durch welche mehrere Filterelemente (4) zwischen dem Lufteinlass (2) und dem Luftauslass (3) gehalten sind, wobei die Filterelemente (4) mit unterschiedlichen Filtermaterialen (21) ausgebildet sind.

11. Vorrichtung nach einem der Ansprüche 6 bis 10, **dadurch gekennzeichnet, dass** der Luftauslass (3) des Luftkanalsystem (1) mit einem Sauganschluss einer Unterdruckquelle (5), insbesondere mit einem Gebläse verbunden ist.

## Claims

1. Method for producing fibres or threads, in which conditioned air is utilized for cooling freshly extruded filaments or for cooling treated fibre strands, or air is used for entangling or texturizing multifilament threads, comprising filtration of air contaminated by the production process, in which the air is suctioned through at least one filter element (4), and in which the filter element (4) is held so as to be replaceable in a filter receptacle installation (6) of an air duct system, **characterized in that** a plurality of filter elements (4) are kept available in the filter receptacle installation (6) in such a manner that a self-acting replacement of the contaminated filter element (4) in the air duct system takes place when one of the filter elements (4) is retrieved, wherein the filter elements (4) are held in filter chambers (7, 9) that are disposed on top of one another and, when replacing the contaminated filter element (4), are connected to one another so as to form a gravity chute (19), wherein a vacuum for assisting the replacement of the filter elements (4) is generated in a lower one of the filter chambers (9).

2. Method according to Claim 1, **characterized in that** the contaminated filter element (4) upon replacement remains in the lower filter chamber (9) and supports the substituted filter element (4) in an operating position.

3. Method according to Claim 1 or 2, **characterized in that** a new filter element (4) is kept available in a plug-in chamber (15), wherein the plug-in chamber (15) for replacing the spent filter element (4) is connected to the upper filter chamber (7).

4. Method according to one of Claims 1 to 3, **characterized in that** the contaminated filter element (4) can be retrieved only once the connection between the new filter element (4) and the spent filter element (4) has been released.

5. Device for producing fibres or threads, in which conditioned air is utilized for cooling freshly extruded filaments or for cooling treated fibre strands, or air is used for entangling or texturizing multifilament threads, and for filtering contaminated air, having an air duct system (1) which has an air inlet (2), an air outlet (3), and a filter receptacle installation (6), wherein the filter receptacle installation (6) holds at least one filter element (4) between the air inlet (2) and the air outlet (3), **characterized in that** the filter receptacle installation (6) for receiving a plurality of filter elements (4) has a plurality of filter chambers (7, 9) which are mutually disposed in such a manner that the filter element (4) when being replaced is able to be guided in a sliding manner from one of the filter chambers (7, 9) into another filter chamber (7, 9), wherein the filter chambers (7, 9) of the filter receptacle installation (6) form a gravity chute (19) in which the filter elements (4) are held on top of one another, wherein the filter element (4, 17.1) between the air inlet (2) and the air outlet (3) is held in an upper one of the filter chambers (7) which is configured so as to be air-permeable between the air inlet (2) and the air outlet (3) and has an upper filter opening (8) for a new filter element (4, 17.3) to drop in, wherein a vacuum for assisting the replacement of the filter elements (4) is generated in a lower one of the filter chambers (9).

6. Device according to Claim 5, **characterized in that** the filter opening (8) of the upper filter chamber (7) has a sliding lid (11), wherein the sliding lid (11) is configured so as to be movable for opening and closing the upper filter chamber (7).

7. Device according to Claim 5 or 6, **characterized in that** the lower one of the filter chambers (9) has closed chamber walls (14) and a lateral retrieval opening (10) having a closable cover (12).

8. Device according to one of Claims 5 to 7, **characterized in that** the filter receptacle installation (6) above the upper filter chamber (7) has a plug-in chamber (15) having a closable plug-in opening (16), wherein the plug-in chamber (15) is able to be connected to the upper filter chamber (7).

9. Device according to one of Claims 6 to 8, **characterized in that** the filter elements (4) are in each case formed by a filter cartridge (17) which is formed from a frame (20) and at least one filter material (21).

10. Device according to one of Claims 6 to 9, **characterized in that** a plurality of filter receptacle installations (6.1, 6.2), by way of which a plurality of filter elements (4) are held between the air inlet (2) and the air outlet (3), are provided beside one another in parallel on the air duct system (1), wherein the filter elements (4) are configured with different filter materials (21).

11. Device according to one of Claims 6 to 10, **characterized in that** the air outlet (3) of the air duct system (1) is connected to a suction connector of a negative-pressure source (5), in particular to a fan.

## Revendications

1. Procédé de fabrication de fibres ou de fils dans lequel de l'air conditionné est utilisé pour refroidir des filaments fraîchement extrudés ou pour refroidir des mèches de fibres traitées, ou de l'air est utilisé pour enchevêtrer ou texturer des fils multifilaments, comprenant une filtration d'un air contaminé par le processus de fabrication, dans lequel l'air est aspiré à travers au moins un élément de filtration (4) et dans lequel l'élément de filtration (4) est maintenu de manière interchangeable dans un dispositif de réception de filtre (6) d'un système de canal d'air, **caractérisé en ce que** plusieurs éléments de filtration (4) sont tenus à disposition dans le dispositif de réception de filtre (6) de telle sorte que, lors du prélèvement de l'un des éléments de filtration (4), un remplacement automatique de l'élément de filtration (4) encrassé s'effectue dans le système de canal d'air, les éléments de filtration (4) étant maintenus dans des chambres de filtration (7, 9) agencées les unes au-dessus des autres qui, lors du remplacement de l'élément de filtration (4) encrassé, sont reliées entre elles en un puits de chute (19), un vide étant généré dans une chambre inférieure des chambres de filtration (9) pour assister le remplacement des éléments de filtration (4).

2. Procédé selon la revendication 1, **caractérisé en ce qu'**après le remplacement, l'élément de filtration (4) encrassé reste dans la chambre de filtration inférieure (9) et soutient l'élément de filtration (4) inséré en remplacement dans une position de fonctionnement.

3. Procédé selon la revendication 1 ou 2, **caractérisé en ce qu'**un nouvel élément de filtration (4) est tenu à disposition dans une chambre d'insertion (15), la chambre d'insertion (15) étant reliée à la chambre de filtration supérieure (7) pour le remplacement de l'élément de filtration (4) usagé.

4. Procédé selon l'une quelconque des revendications 1 à 3, **caractérisé en ce que** l'élément de filtration (4) encrassé ne peut être retiré qu'après détachement de la liaison entre le nouvel élément de filtration (4) et l'élément de filtration (4) usagé.

5. Dispositif pour la production de fibres ou de fils, dans lequel de l'air conditionné est utilisé pour refroidir des filaments fraîchement extrudés ou pour refroidir des mèches de fibres traitées, ou de l'air est utilisé pour enchevêtrer ou texturer des fils multifilaments, et pour filtrer un air contaminé avec un système de canal d'air (1), qui présente une entrée d'air (2), une sortie d'air (3) et un dispositif de réception de filtre (6), le dispositif de réception de filtre (6) maintenant au moins un élément de filtration (4) entre l'entrée d'air (2) et la sortie d'air (3), **caractérisé en ce que**, pour recevoir plusieurs éléments de filtration (4), le dispositif de réception de filtre (6) présente plusieurs chambres de filtration (7, 9) qui sont agencées les unes par rapport aux autres de telle sorte que l'élément de filtration (4) peut être guidé de manière coulissante lors d'un remplacement de l'une des chambres de filtration (7, 9) dans une autre chambre de filtration (7, 9), les chambres de filtration (7, 9) du dispositif de réception de filtre (6) formant un puits de chute (19) dans lequel les éléments de filtration (4) sont maintenus les uns au-dessus des autres, l'élément de filtration (4, 17.1) étant maintenu entre l'entrée d'air (2) et la sortie d'air (3) dans une chambre supérieure des chambres de filtration (7), qui est réalisée sous forme perméable à l'air entre l'entrée d'air (2) et la sortie d'air (3) et qui présente une ouverture de filtre (8) supérieure pour la chute d'un nouvel élément de filtration (4, 17.3), un vide étant généré dans une chambre inférieure des chambres de filtration (9) pour assister le remplacement des éléments de filtration (4).

6. Dispositif selon la revendication 5, **caractérisé en ce que** l'ouverture de filtre (8) de la chambre de filtration supérieure (7) présente un couvercle coulissant (11), le couvercle coulissant (11) étant réalisé sous forme mobile pour ouvrir et fermer la chambre de filtration supérieure (7).

7. Dispositif selon la revendication 5 ou 6, **caractérisé en ce que** la chambre inférieure des chambres de filtration (9) présente des parois de chambre fermées (14) et une ouverture de prélèvement latérale (10) avec un couvercle (12) pouvant être fermé.

8. Dispositif selon l'une quelconque des revendications 5 à 7, **caractérisé en ce que** le dispositif de réception de filtre (6) présente, au-dessus de la chambre de filtration supérieure (7), une chambre d'insertion (15) avec une ouverture d'insertion (16) pouvant être fermée, la chambre d'insertion (15) pouvant être reliée à la chambre de filtration supérieure (7).

9. Dispositif selon l'une quelconque des revendications 6 à 8, **caractérisé en ce que** les éléments de filtration (4) sont formés chacun par une cassette de filtration (17) formée d'un cadre (20) et d'au moins un matériau de filtration (21).

10. Dispositif selon l'une quelconque des revendications 6 à 9, **caractérisé en ce que** plusieurs dispositifs de réception de filtre (6.1, 6.2) sont prévus parallèlement les uns à côté des autres sur le système de canal d'air (1), par lesquels plusieurs éléments de filtration (4) sont maintenus entre l'entrée d'air (2) et la sortie d'air (3), les éléments de filtration (4) étant réalisés avec différents matériaux de filtration (21).

11. Dispositif selon l'une quelconque des revendications 6 à 10, **caractérisé en ce que** la sortie d'air (3) du système de canal d'air (1) est reliée à un raccord d'aspiration d'une source de dépression (5), notamment à un ventilateur.
